# EUROPÄISCHE PATENTSCHRIFT

(11) **EP 0 610 675 B1**
(45) Veröffentlichungstag und Bekanntmachung des Hinweises auf die Patenterteilung: **08.04.1998**
(21) Anmeldenummer: 94100488.9
(22) Anmeldetag: 14.01.1994
(51) Int. Cl.: E06B 3/968

(54) **Eckverbindung auf Gehrung geschnittener Hohlprofile eines Rahmens für Fenster, Türen oder Fassaden (I)**
Mitre corner joint of hollow profile members for door, window or façade frames
Joint d'angle à onglet de profilés creux pour cadres de fenêtres, portes ou façades

(30) Priorität: 10.02.1993 DE 4303877
(43) Veröffentlichungstag der Anmeldung: 17.08.1994
(60) Teilanmeldung: 97114181.7
(73) Patentinhaber: SCHÜCO International KG, 33609 Bielefeld (DE)
(72) Erfinder: Habicht, Siegfried, D-33818 Leopoldshöhe (DE); Girnus, Manfred, D-33818 Leopoldshöhe (DE)
(74) Vertreter: Loesenbeck, Karl-Otto, Dipl.-Ing.

(56) Entgegenhaltungen:
- CA-A- 1 006 052
- CH-A- 542 370
- DE-A- 1 904 908
- DE-A- 2 307 595
- DE-A- 3 015 140
- DE-A- 3 022 192
- DE-A- 3 102 921
- DE-U- 8 621 143
- US-A- 2 742 690
- US-A- 3 528 692
- US-A- 3 994 109

## Beschreibung

Die Erfindung bezieht sich auf einen Eckverbinder und zugeordnete, auf Gehrung geschnittene Hohlprofile eines Rahmens für Fenster, Türen oder Fassaden mit einem mit seinen Schenkeln in Innenkammern der Hohlprofile eingreifenden Eckverbinder, deren Höhe der lichten Höhe der Innenkammern entspricht, mit dem die Hohlprofile unter kraftschlüssiger Abstützung in der Gehrungsfuge durch in Aufnahmen des Eckverbinders einformbare, eintreibbare oder einschraubbare Befestigungsmittel verspannbar sind und mit einem quer zur Längsmittelebene verlaufenden Verteilungskanal für eine einspritzbare Klebemasse, der sich über die HÖhe des Eckverbinders erstreckt und durch die aufgeschobenen Hohlprofile begrenzt wird.

Es ist zwar eine Eckverbindung der genannten Art bekannt (DE-A-30 22 192), bei der das Einspritzen von Kleber in die vorgefertigte Rahmenecke möglich ist, jedoch sind die konkreten Maßnahmen nicht geeignet, die an eine Rahmenecke gestellten Anforderungen hinsichtlich Festigkeit, Fließverhalten des Niedrigviskose-Klebers und die erforderliche Kleberverteilung wie auch optimale Verarbeitungsbedingungen sicherzustellen.

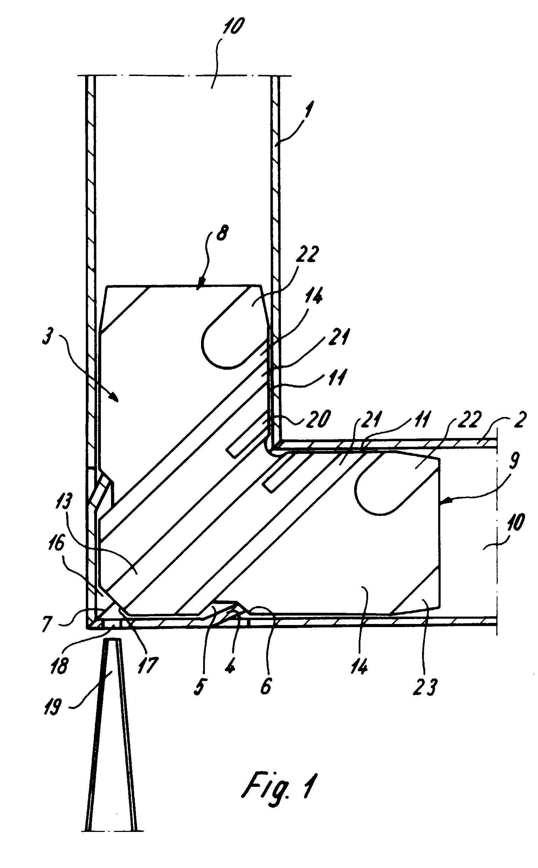

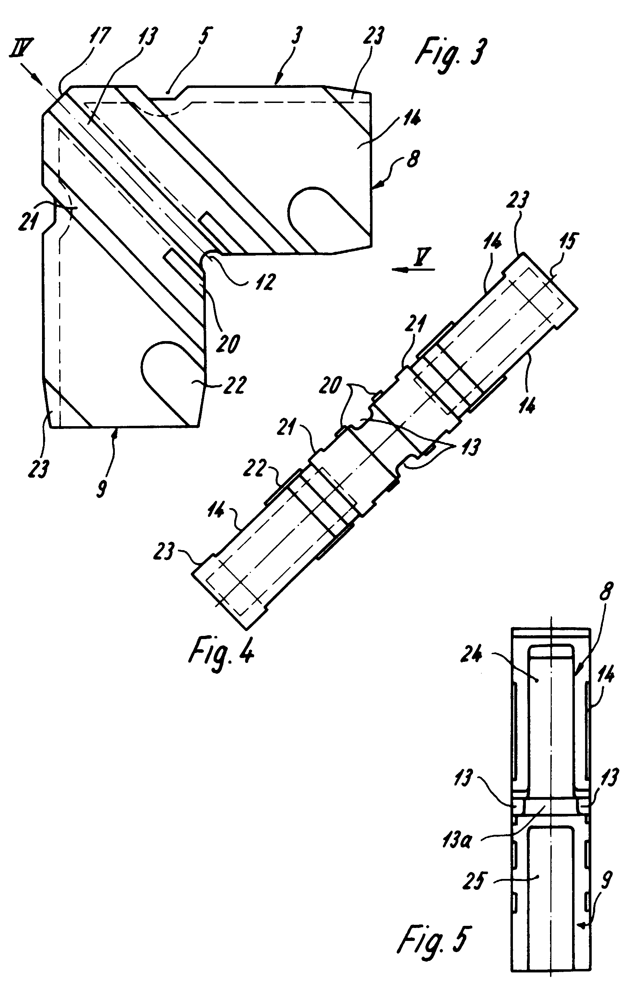

Der nach der genannten Literaturstelle bekannte Eckverbinder weist in der inneren Ecke eine den Verteilungskanal für die Klebemasse bildende Ausnehmung auf. Diese Ausnehmung befindet sich im Bereich der größten auftretenden Spannungen einer Eckverbindung.
Um die Festigkeit sicherzustellen und Kerbwirkungen zu vermeiden, muß diese Ausnehmung so klein wie möglich gehalten werden und im Übergangsbereich zu den Innenflächen des Eckverbinders stark abgerundet sein, so daß ein günstiger Spannungsverlauf erzielt wird.
Gemäß den Figuren 1 und 3 der Literaturstelle ist die Ausnehmung lediglich so gewählt, daß die Gratbildung der Innenwandungen der auf Gehrung geschnittenen Rahmenprofile in dieser Ausnehmung Platz findet. Eine gewisse Gratbildung ist in diesem Bereich nicht zu vermeiden. Somit wird die aus Festigkeitsgründen klein zu wählende Ausnehmung weitgehendst durch die in dieser Ausnehmung hineinragende Gehrungswandung wieder verschlossen. Der Niedrigviskose-Zweikomponentenkleber erfordert andererseits relativ große Anfangsströmungsquerschnitte, um überhaupt unter dem begrenzt möglichen Auspreßdruck des Klebers in der entsprechenden Ausnehmung transportiert zu werden. Die Ausnehmung ist somit schon aus den genannten Gründen als Verteilungskanal für die Klebemasse nicht geeignet.

Zum Ansetzen einer Klebereinspritzdüse ist eine Bohrung vorgesehen, die in der Gehrungsebene liegt. Nachteilig ist, daß diese Bohrung erst nach dem mechanischen Zusammenfügen und Fixieren der Eckverbindung gebohrt werden kann.

Die Literaturstelle sieht zwar Kanäle zur Verteilung des Klebers vor, die aber endseitig offen sind und von daher den Kleber am Ende nach Befüllen dieser Nuten in den Hohlraum des Profiles wieder hinauslassen, da sich an diesen Stellen kein Druck aufbauen kann, der bewirkt, daß Kleber an die Innenflächen zwischen Profil und Eckverbinder gelangt.

Der Erfindung liegt die Aufgabe zugrunde, einen Eckverbinder und zugeordnete, auf Gehrung geschnittene Hohlprofile der eingangs genannten Art für den Einsatz von einspritzbaren Klebemassen so zu gestalten, daß die Klebemasse beim Einspritzen an einer Stelle der Eckverbindung in geeigneter Weise an die entsprechenden, für die Festigkeit wesentlichen Flächen geleitet wird.

Diese Aufgabe wird erfindungsgemäß durch die Merkmale des gekennzeichnenden Teils des Patentanspruches 1 in Verbindung mit den Merkmalen des Oberbegriffs gelöst.

Für die Verklebung zwischen dem Eckverbinder und den aufgeschobenen und fest gespannten Rahmenprofilen wird nur eine geringe Klebemenge benötigt, da die Abmessungen der Spalträume zur Aufnahme der Klebemasse durch die erfindungsgemäße Gestaltung der Funktionsteile der Eckverbindung festgelegt und die Klebemassen daran gehindert werden, in andere Kammern im Verbindungsbereich einzudringen.

Im Vergleich mit den bekannten Spachtelverfahren wird bei der erfindungsgemäßen Eckverbindung mit einem Drittel bzw. mit einer halben Menge an Kleber eine ausreichende Festigkeit in der Verklebung zwischen den Rahmenprofilen und dem Eckverbinder erzielt.

Neben der Verringerung der Klebermenge für das Erreichen eines guten Verklebungsergebnisses spielt bei der erfindungsgemäßen Eckverbindung auch die Sauberkeit während des Verklebens der Rahmenprofile mit dem Eckverbinder eine wichtige Rolle, da Nacharbeiten zum Entfernen von nach außen gedrungener Klebemasse entfallen.

Weitere Merkmale der Erfindung ergeben sich aus den Unteransprüchen.

Ausführungsbeispiele der erfindungsgemäßen Eckverbindung sind in den Zeichnungen dargestellt und werden im folgenden beschrieben. Es zeigen:
- Fig. 1 und 2: in den mechanischen Befestigungsmitteln abweichende Eckverbindungen auf Gehrung geschnittener Hohlprofile, teilweise im Schnitt,
- Fig. 2a: eine Ansicht in Richtung des Pfeiles IIa in Fig. 2,
- Fig. 3: den in der Fig. 1 aufgezeigten Eckverbinder im Grundriß,
- Fig. 4: eine Ansicht in Richtung des Pfeiles IV in Fig. 3,
- Fig. 5: eine Ansicht in Richtung des Pfeiles V in Fig. 3,
- Fig. 6: einen aus zwei winkelförmigen Teilen bestehenden Eckverbinder im Grundriß,
- Fig. 7: eine Ansicht in Richtung des Pfeiles VII in Fig. 6 mit einem geschnittenen Teilbereich,
- Fig. 8: einen Schnitt nach Linie VIII-VIII in Fig. 6,
- Fig. 9: einen Schnitt nach der Linie VIII-IX in Fig. 6,
- Fig. 10: einen aus einem stranggepreßten Profil geschnittenen Eckverbinder mit dem zugeordneten stranggepreßten Profil in perspektivischer Darstellung,
- Fig. 11: den Eckverbinder nach der Fig. 10 mit einer Abdeckung der Öffnungen an den Flankenseiten im Grundriß,
- Fig. 12: eine Ansicht in Richtung des Pfeiles XII in Fig. 11,
- Fig. 13: den Abdeckungskörper für die Flankenseiten des Eckverbinders nach der Fig. 10 im Grundriß,
- Fig. 14: eine Ansicht in Richtung des Pfeiles XIV in Fig. 13,
- Fig. 15: eine Ansicht in Richtung des Pfeiles XV in der Fig. 14,
- Fig. 16: ein mit Abstandsstücken zur Bildung von Spalträumen versehenes Rahmenprofil in perspektivischer Darstellung.

Die Rahmenecke nach der Fig. 1 wird durch die auf Gehrung geschnittenen Profile 1 und 2 sowie durch einen Eckverbinder 3 gebildet, mit dem die Profile 1 und 2 durch ausgestanzte Laschen 4 verspannt werden. Diese Laschen stützen sich beim Einformen in Ausnehmungen 5 des Eckverbinders an Schrägflächen 6 ab und pressen die Profile 1 und 2 in der Gehrungsfuge 7 zusammen. Ferner werden die Schenkel 8 und 9 des Eckverbinders, die in Innenkammern 10 der Hohlprofile eingreifen, mit ihren Innenflächen 11 an die Innenfläche der Rahmenecke gedrückt.

Nach der mechanischen Verspannung der Profile 1 und 2 mit dem Eckverbinder 3 ist somit eine kraftschlüssige Verbindung zwischen den Profilen 1 und 2 in der Gehrungsfuge 7 und zwischen den Innenseiten 11 des Eckverbinders und den zugeordneten Flächen der Profile 1 und 2 gegeben.

Die Schenkel 8 und 9 des Eckverbinders 3 können somit zur Innenseite geöffnet sein, ohne daß in diesem Bereich Klebemasse von den Außenflächen des Eckverbinders 3 Flankenflächen des Eckverbinders 3 in den Innenraum der Schenkel 8 und 9 einfließen kann.

Die Schenkel 8 und 9 des Eckverbinders 3 sind U-förmig ausgebildet und an den freien Stirnseiten sowie an den Innenseiten geöffnet.

Der Eckverbinder 3 weist im Bereich der Ecklinie 12, die mit der Gehrungsfuge 7 fluchtet Nuten 13 auf, die von den Flankenflächen 14 ausgehen, wobei die Flankenflächen 14 Außenflächen des Eckverbinders 3 bilden, die parallel zur Längsmittelebene 15 des Eckverbinders verlaufen.

Die Nuten 13 stehen mit einem quer zur Längsmittelebene 15 verlaufenden Verteilungskanal 16 für eine einspritzbare Klebemasse in Verbindung, der sich über die Höhe des Eckverbinders 3 erstreckt und duich eine Abflachung 17 im Bereich der Spitze des Eckverbinders und durch die aufgeschobenen Profile 1 und 2 begrenzt wird. Benachbart der Gehrungsfuge 7 weist der Verteilungskanal 16 eine Einspritzöffnung 18 für die Klebemasse auf. In die Einspritzöffnung 18 kann eine angepaßte Spitze 19 einer Klebepresse schließend eingeführt werden.

Durch die Abflachung 17 des Eckverbinders wird in der Rahmenecke ein das Fließverhalten des Klebers begünstigender Verteilungskanal 16 geschaffen, durch den der eingespritzte Kleber in die beiden Nuten 13 eingeführt wird und von diesen Nuten aus auf die Flankenflächen 14 gelangt.

Die Flankenflächen 14 des Eckverbinders bilden mit den zugeordneten Innenflächen der Hohlprofile 1 und 2 Spalträume zur Aufnahme der Klebemasse, deren Höhe durch Abstandsstücke bestimmt ist.

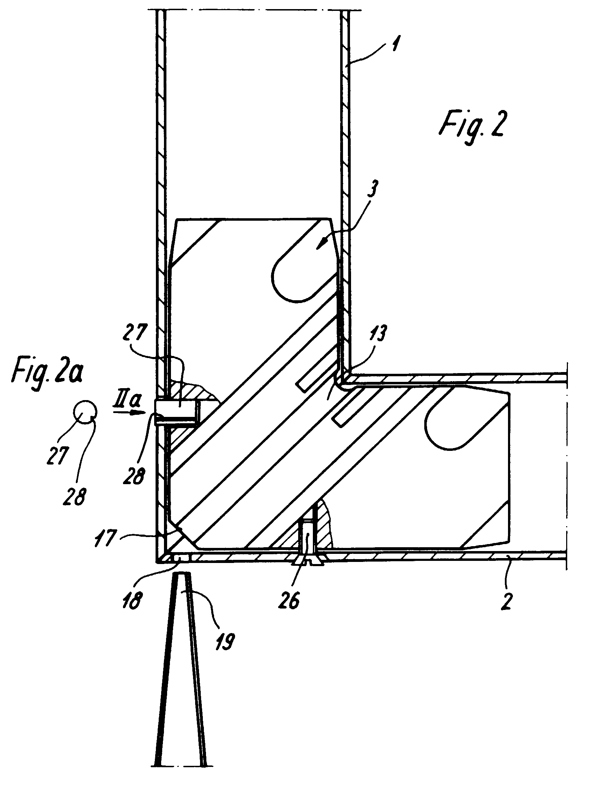

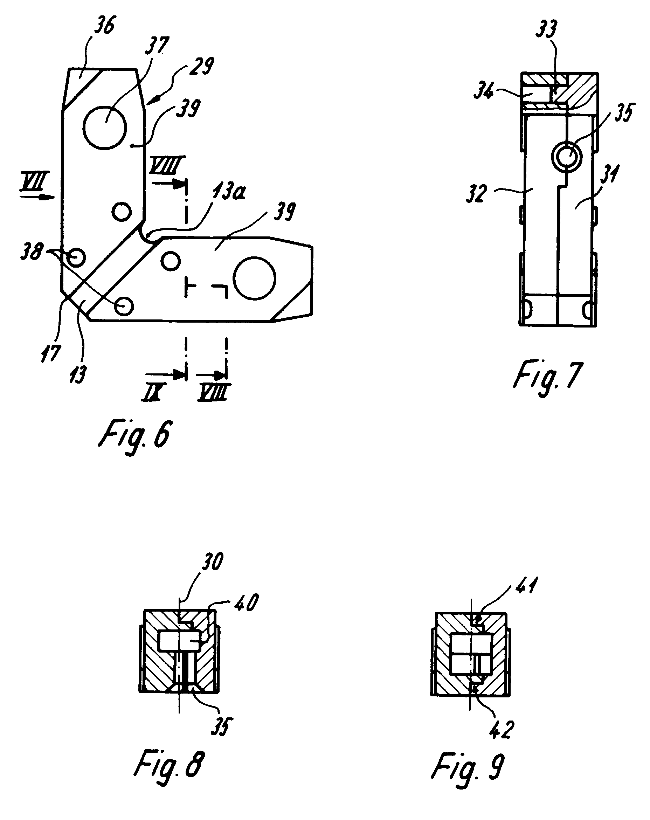

Diese Abstandsstücke 20,21,22 und 23 sind in dem Ausführungsbeispiel nach den Fig. 1 und 2 und auch bei dem Ausführungsbeispiel nach den Fig. 6 bis 9 mit dem Verbinder einstückig und können eine beliebige geometrische Form haben.

In dem dargestellten Ausführungsbeispiel sind die Abstandsstücke 20 und 21 rippenförmig ausgebildet und verlaufen parallel zur Ecklinie 12, während die Abstandsstücke 22 und 23 Vorsprünge von Teilflächen der Flankenflächen darstellen und dreieckförmige bzw. ellipsenförmige Konturen besitzen.

In Abwandlung der aufgezeigten Ausführungen können die Abstandsstücke auch auf die Flankenflächen des Eckverbinders aufgesetzt sein und aus dem gleichen oder einem anderen Material als der Eckverbinder bestehen. Die aufgesetzten Abstandsstücke können durch ein Klebemittel mit dem Eckverbinder verbunden sein.

Die Höhe der Abstandsstücke bzw. die Höhe der Spalträume zur Aufnahme von Klebemasse ist so gewählt, daß die Klebemasse in den Spalträumen ausreichend fließen kann und daß die Klebemasse die für die Eckverbindung optimale Schichtdicke bildet, um die gewünschte Scherfestigkeit zu erreichen.

Durch die Anordnung des Verteilungskanals 16 und der Nuten 13 im Bereich der Gehrungsfuge 7 wird im Bereich der Gehrungsfuge eine größere Schichtdicke des ausgehärteten Klebers erreicht, der mit zunehmender Schichtdicke elastischer wird und so für eine zusätzliche Abdichtung der Eckverbindung sorgt.

Durch das Ausstanzen der Laschen 4 aus dem Material der Hohlprofile 1 und 2 und durch das Einführen dieser Laschen 4 in die Ausnehmungen 5 des Eckverbinders wird eine geringe Öffnung zum Profilinnenraum vorgenommen.

Die Abstandsstücke sind auf den Flankenflächen so angeordnet, daß erst nach dem Einpressen einer bestimmten Menge an Kleber und nach einer entsprechenden Verteilung auf den Flankenflächen ein Rückstau im Bereich der Laschen 4 entsteht und ein wenig Klebemasse nach außen dringt. Hierdurch wird angezeigt, daß ein ausreichender Füllungsgrad an Kleber in der Eckverbindung vorhanden ist.

Aus der Fig. 5 ergibt sich, daß die Nut 13, die in der Ecklinie zwischen den Flankenflächen 14 zur Verteilung der Klebemasse vorgesehen ist, auch die Innenecke durchläuft und dort den Nutteil 13a bildet.

Im Bereich der Nut 13,13a und der Abflachung 17 ist der Eckverbinder massiv ausgebildet, während die sich daran anschließenden Schenkel 8 und 9 Innnenkammern 24,25 aufweisen, die zur freien Stirnseite der Schenkel und zur Innenseite der Rahmenecke geöffnet sind.

Durch diese Innenkammern 24 und 25 wird das Gewicht des Eckverbinders herabgesetzt. An den Flankenflächen und an der Außenseite der Rahmenecke ist der Eckverbinder geschlossen.

Aus der Fig. 2 ergibt sich, daß anstelle der in die Hohlprofile 1 und 2 eingestanzten Laschen 4 zur Verspannung der Hohlprofile 1 und 2 mit dem Eckverbinder 3 auch eine Senkkopfschraube 26 oder ein Nagel 27 verwendet werden kann. Der Nagel 27 ist mit einer Kerbe 28 ausgerüstet. Zur Erzielung der Verspannung zwischen den auf die Eckverbinder geschobenen Hohlprofilen und dem Eckverbinder bzw. zur Erzielung der kraftschlüssigen Verbindung in der Gehrungsfuge ist ein Versatz zwischen der Gewindebohrung im Eckverbinder und der Aufnahmebohrung für den Schraubenkopf im Hohlprofil bzw. ein Versatz zwischen der Aufnahmebohrung für den Nagel 27 und der zugeordneten Bohrung in dem Hohlprofil vorgesehen. Hierdurch ergibt sich bei der Schraubverbindung ein Spalt für das Austreten von Kleber, durch den der ausreichende Füllungsgrad signalisiert wird. Bei der Nagelverbindung kann Kleber durch die Kerbe 29 austreten.

In den Fig. 6 bis 9 ist ein Eckverbinder 29 aufgezeigt, der in der Längsmittelebene 30 oder in einer Parallelebene dazu durchgehend geteilt ist. Die Verbinderteile 31 und 32 werden durch Zapfen 33 des einen Verbinderteils, die in Bohrungen 34 des anderen Verbinderteils eingreifen, formschlüssig miteinander verbunden.

Die Teilungsebene zwischen den Verbinderteilen 31 und 32 erstreckt sich durch Bohrungen 35, von denen jeweils eine im Bereich eines Schenkels vorgesehen ist und von der Außenseite des Eckverbinders ausgeht.

In diese Bohrungen 35 werden Bolzen zum Spreizen der Eckverbinderteile und zum Transport der Hohlprofile in Richtung auf die Gehrungsfuge eingetrieben, so daß einerseits die Abstandsstücke 36,37,38, die an den Flankenflächen 39 vorgesehen sind, zur Anlage an den Innenflächen der aufgeschobenen Profile kommen und andererseits die Profile in der Gehrungsfuge aufeinandergepreßt werden.

Im Bereich der Ecklinie des Verbinders sind ebenfalls wie beim Eckverbinder nach den Fig. 1 und 2 von den Flankenflächen 39 ausgehende Nuten 13 vorgesehen, die an der Außenseite der Rahmenecke in einen Verteilungskanal für die Klebemasse einmünden, der von einer Abflachung 17 im Eckbereich des Eckverbinders begrenzt wird. In der Innenecke des Eckverbinders werden die Nuten 13 durch die Nut 13a fortgesetzt.

Der Eckverbinder weist im Bereich der Schenkel Innenkammern 40 auf, in die von außen keine Klebemasse eindringen kann, da diese Innenkammern durch Labyrinthdichtungen 41,42 abgedichtet sind, die durch einander überlappende Teil gestufter Flächen der Verbinderteile 31,32 gebildet werden.

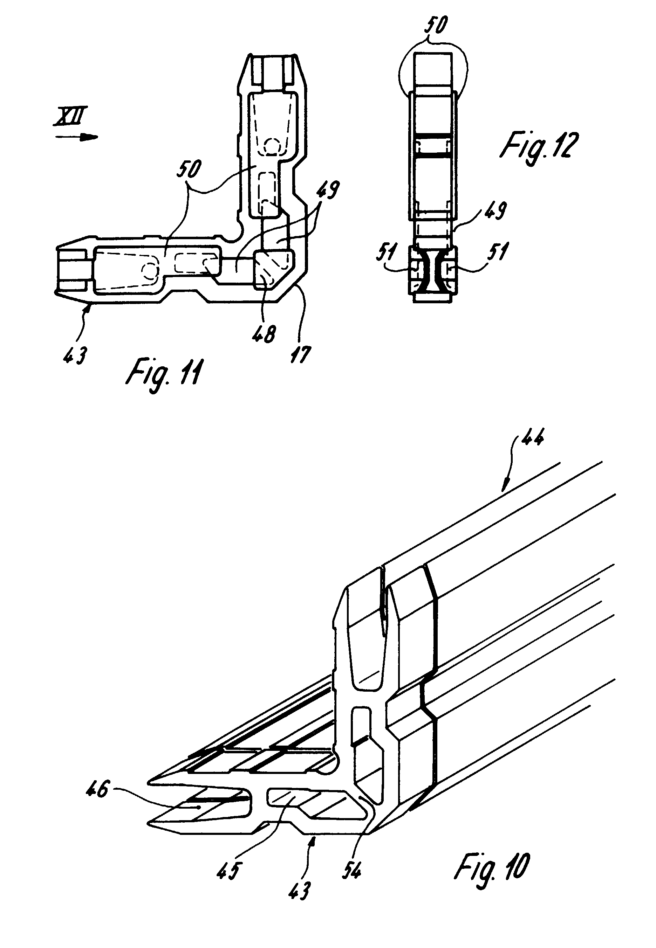

In der Fig. 10 ist ein Eckverbinder 43 in perspektivischer Darstellung aufgezeigt, der aus einem Strangpreßprofil 44 geschnitten wird.

Dieser Eckverbinder weist Hohlkammern 45,46 auf, durch die das Gewicht des Eckverbinders herabgesetzt wird. Diese Hohlkammern sind zu den Flankenflächen bzw. zusätzlich zu den stirnseitigen freien Enden des Eckverbinders geöffnet, so daß der Eckverbinder in dieser Form nicht in der Rahmenecke verwendet werden kann, da nach dem mechanischen Festlegen der auf die Verbinderschenkel geschobenen Hohlprofile das Einbringen von Klebemasse in die Rahmenecke dazu führen würde, daß die Klebemasse in die Hohlkammern 45 und 46 abfließen würde.

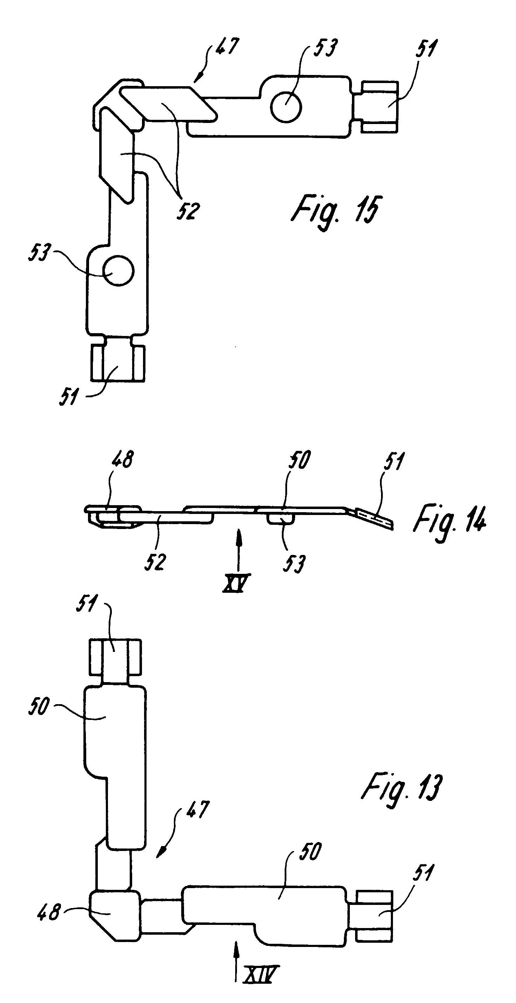

Um ein Abfließen der Klebemasse in die Hohlkammern zu unterbinden, wird bei dem Ausführungsbeispiel nach den Fig. 11 bis 15 auf die Flankenflächen jeweils ein winkelförmiger Abdeckkörper 47 gesetzt, der die Nuten und Rinnen für die Klebemasse begrenzt und Abstandsstücke aufweist, die die Höhe der Spalträume zur Aufnahme der Klebemasse festlegen. Der Eckverbinder 43 weist ebenfalls anstelle einer Spitze eine Abflachung 17 auf, die mit den auf die Verbinderschenkel aufgeschobenen Hohlprofilen den Verteilungskanal für die eingespritzte Klebemasse begrenzt.

Der Abdeckkörper 47 weist an der der Abflachung 17 zugewandten Seite ein dreieckförmiges Abstandsstück 48, das Strömungskanäle 49 zusammen mit weiteren Abstandsstücken 50 begrenzt.

An den freien Enden ist der Abdeckkörper 47 mit federnden Zungen 51 ausgerüstet, die vom Abdeckkörper schräg nach unten verlaufen und in die Hohlkammern 46 des Eckverbinders eingreifen.

An der Unterseite weist der Abdeckkörper Anformungen 52 und 53 auf, die in die Hohlkammern 45 und 46 eingreifen. Durch diese Anformungen 52,53 und Zungen 51 wird der Abdeckkörper 47 an dem Eckverbinder 43 fixiert.

Während bei dem dargestellten Ausführungsbeispiel jeder Flankenseite des Eckverbinders 43 ein Abdeckkörper 47 zugeordnet ist, besteht auch die Möglichkeit, die Abdeckung der Öffnungen der Hohlkammern zur Flankenseite hin mit mehreren Abdeckkörpern vorzunehmen.

Bei dem Eckverbinder 43 ist im Bereich der Ecklinie ein Steg 54 vorgesehen.

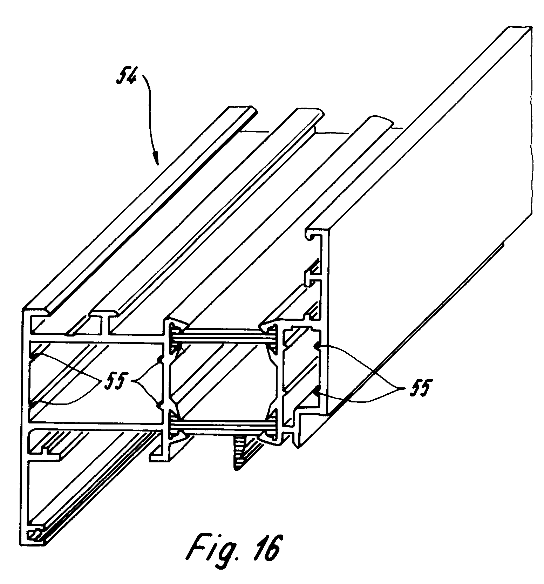

Während bei den bisher beschriebenen Ausführungsbeispielen die Abstandsstücke zur Bestimmung der Höhe der Spalträume zur aufnahme von Klebemasse einstückig mit dem Eckverbinder oder mit dem Verbinder durch einen Kleber o.dgl. verbunden waren, besteht auch die Möglichkeit, die in der Fig. 16 aufgezeigt ist, die Hohlprofile 54 mit Abstandsstücken 55 zu versehen, die mit einer Flankenfläche des Eckverbinders den jeweiligen Spaltraum zur Aufnahme von Klebemasse begrenzen.

### Bezugszeichen

- 1: Profil
- 2: Profil
- 3: Eckverbinder
- 4: Lasche
- 5: Ausnehmung
- 6: Schrägfläche
- 7: Gehrungsfuge
- 8: Schenkel
- 9: Schenkel
- 10: Innenkammer
- 11: Innenfläche
- 12: Ecklinie
- 13: Nut, 13a Nutteil
- 14: Flankenfläche
- 15: Längsmittelebene
- 16: Verteilungskanal
- 17: Abflachung
- 18: Einspritzöffnung
- 19: Spitze
- 20: Abstandsstück
- 21: Abstandsstück
- 22: Abstandsstück
- 23: Abstandsstück
- 24: Innenkammer
- 25: Innekammer
- 26: Senkkopfschraube
- 27: Nagel
- 28: Kerbe
- 29: Eckverbinder
- 30: Längsmittelebene
- 31: Verbinderteil
- 32: Verbinderteil
- 33: Zapfen
- 34: Bohrung
- 35: Bohrung
- 36: Abstandsstück
- 37: Abstandsstück
- 38: Abstandsstück
- 39: Flankenfläche
- 40: Innenkammer
- 41: Labyrinthdichtung
- 42: Labyrinthdichtung
- 43: Eckverbinder
- 44: Strangpreßprofil
- 45: Hohlkammer
- 46: Hohlkammer
- 47: Abdeckkörper
- 48: Abstandsstück
- 49: Strömungskanal
- 50: Abstandsstück
- 51: Zunge
- 52: Anformung
- 53: Anformung
- 54: Hohlprofil
- 55: Abstandsstück

## Patentansprüche

1. Eckverbinder und zugeordnete, auf Gehrung geschnittene Hohlprofile (1,2) eines Rahmens für Fenster, Türen oder Fassaden mit einem mit seinen Schenkeln in Innenkammern der Hohlprofile eingreifenden Eckverbinder (3,29,43), deren Höhe der lichten Höhe der Innenkammern entspricht, mit dem die Hohlprofile (1,2) unter kraftschlüssiger Abstützung in der Gehrungsfuge durch in Aufnahmen des Eckverbinders einformbare, eintreibbare oder einschraubbare Befestigungsmittel verspannbar sind und mit einem quer zur Längsmittelebene (15,30) verlaufenden Verteilungskanal (16) für eine einspritzbare Klebemasse, der sich über die Höhe des Eckverbinders erstreckt und durch die aufgeschobenen Hohlprofile begrenzt wird, **dadurch gekennzeichnet**, daß der Verteilungskanal (16) durch eine Abflachung (17) im Bereich der äußeren Ecke des Eckverbinders und durch die aufgeschobenen Hohlprofile (1,2) begrenzt wird und daß der Eckverbinder (3,29,43) im Bereich oder benachbart der Ecklinie (12) bzw. der Gehrungsfuge (7) von den parallel zu seiner Längsmittelebene (15,30) verlaufenden Flankenflächen (14,39) ausgehende Nuten (13,49) aufweist, die mit dem Verteilungskanal (16) in Verbindung stehen und daß zwischen den parallel zu der Längsmittelebene (15,13) verlaufenden Flankenflächen (14,39) und den inneren Begrenzungsflächen der Hohlprofile durch Abstandsstücke (20,21,22,23;36,37,38;48,50;55) bestimmte Spalträume zur Aufnahme von durch den Verteilungskanal (16) zugeführter Klebemasse vorgesehen sind.

2. Eckverbinder und zugeordnete Hohlprofile nach Anspruch 1, dadurch gekennzeichnet, daß die Einspritzöffnung (18) der Klebemasse in der Nähe der Gehrungsfuge (7) vorgesehen ist und in den Verteilungskanal (16) einmündet.

3. Eckverbinder und zugeordnete Hohlprofile nach Anspruch 1, dadurch gekennzeichnet, daß die Abstandsstücke mit dem Eckverbinder oder mit den Hohlprofilen einstückig oder auf den Eckverbinder oder auf die Hohlprofile aufgesetzt sind.

4. Eckverbinder und zugeordnete Hohlprofile nach Anspruch 3, dadurch gekennzeichnet, daß die Abstandsstücke (20,21,22,23;36,37,38) als Vorsprünge von Teilflächen der Flankenflächen oder als Rippen ausgebildet sind.

5. Eckverbinder und zugeordnete Hohlprofile nach Anspruch 4, dadurch gekennzeichnet, daß die mit dem Eckverbinder einstückigen, rippenförmigen Abstandsstücke (20,21) parallel zur mit der Gehrungsfuge fluchtenden Ecklinie des Eckverbinders sich erstrecken.

6. Eckverbinder und zugeordnete Hohlprofile nach Anspruch 3, dadurch gekennzeichnet, daß die mit den Hohlprofilen einstückigen Abstandsstücke (55) als in Längsrichtung der Hohlprofile sich erstreckende Rippen ausgebildet sind.

7. Eckverbinder und zugeordnete Hohlprofile nach Anspruch 3, dadurch gekennzeichnet, daß die Abstandsstücke aus dem gleichen oder aus einem anderen Material als der Eckverbinder gefertigt und an dem Eckverbinder durch ein Klebemittel befestigt sind.

8. Eckverbinder und zugeordnete Hohlprofile nach Anspruch 1, dadurch gekennzeichnet, daß die in der Ecklinie zwischen den Flankenflächen vorgesehene Nut (13) zur Verteilung der Klebemasse auch die Innenecke des Eckverbinders durchläuft.

9. Eckverbinder und zugeordnete Hohlprofile nach einem der vorhergehenden Ansprüche, dadurch gekennzeichnet, daß die Schenkel (8,9) des Eckverbinders (3) U-förmig ausgebildet und an den freien Stirnseiten und an den Innenseiten geöffnet sind.

10. Eckverbinder und zugeordnete Hohlprofile nach einem der vorhergehenden Ansprüche, dadurch gekennzeichnet, daß die aus den Hohlprofilen geformten Befestigungsmittel Öffnungen zum Austritt von Klebemasse nach außen nach dem Erreichen eines ausreichenden Füllungsgrades bilden oder freigeben.

11. Eckverbinder und zugeordnete Hohlprofile nach Anspruch 1, dadurch gekennzeichnet, daß der Eckverbinder in der Längsmittelebene (30) oder in einer Parallelebene dazu durchgehend geteilt ist und die Verbinderteile (31,32) durch sich durch die Teilungsebene erstreckende Zapfen (33) des einen Verbinderteils (31), die in Bohrungen (34) des anderen Verbinderteils (32) eingreifen, formschlüssig miteinander verbunden sind.

12. Eckverbinder und zugeordnete Hohlprofile nach Anspruch 11, dadurch gekennzeichnet, daß zur Teilungsebene verlaufenden, mit Klebemasse belegbare Außenflächen des Eckverbinders gegenüber den Innenkammern (40) durch eine durch gestufte Flächen gebildete Labyrinthdichtung (41,42) abgedichtet sind.

13. Eckverbinder und zugeordnete Hohlprofile nach Anspruch 1, dadurch gekennzeichnet, daß der Eckverbinder (43) mindestens zwei Hohlkammem (45,46) aufweist, die an den parallel zu der Längsmittelebene verlaufenden Flankenseiten und ggf. an den freien Stirnenden der Verbinderschenkel geöffnet, die Öffnungen an den Flankenseiten durch Abdeckkörper (47) verschlossen sind und die Abdeckkörper Nuten und Rinnen für die Führung der Klebemasse bilden und die Abstandsstücke (48,50) aufweisen.

14. Eckverbinder und zugeordnete Hohlprofile nach Anspruch 13, dadurch gekennzeichnet, daß der Abdeckkörper (47) an der Unterseite mit Anformungen (52,43) versehen ist, und an den freien Enden Zungen (51) aufweist, die in die Hohlkammern (45,46) eingreifen.

15. Eckverbinder und zugeordnete Hohlprofile nach Anspruch 13, dadurch gekennzeichnet, daß der Eckverbinder (43) aus einem Strangpreßprofil (44) geschnitten ist.

## Claims

1. A corner connector and associated mitre-cut hollow profile members (1, 2) of a frame for windows, doors or facade assemblies comprising a corner connector (3, 29, 43) engaging with its limbs into internal chambers of the hollow profile members, their height corresponding to the internal height of the internal chambers, with which the hollow profile members (1, 2) can be braced, with force-locking support in the mitre join, by fixing means which can be shaped into, driven into or screwed into receiving means in the corner connector, and further comprising a distribution passage (16) for an injectable adhesive material, which extends transversely with respect to the longitudinal central plane (15, 30) and which extends over the height of the corner connector and which is defined by the hollow profile members pushed thereon, characterised in that the distribution passage (16) is defined by a flattened portion (17) in the region of the outer corner of the corner connector and by the hollow profile members (1, 2) which are pushed thereon and that in the region of or adjacent to the corner line (12) or the mitre join (7) the corner connector (3, 29, 43) has grooves (13, 49) which start from the flank surfaces (14, 39) extending parallel to its longitudinal central plane (15, 30) and which communicate with the distribution passage (16) and that provided between the flank surfaces (14, 39) which extend parallel to the longitudinal central plane (15, 13) and the inner boundary surface of the hollow profile members are gap spaces which are determined by spacer portions (20, 21, 22, 23; 36, 37, 38; 48, 50; 55), for receiving adhesive material which is supplied through the distribution passage (16).

2. A corner connector and associated hollow profile members according to claim 1 characterised in that the adhesive material injection opening (18) is provided in the proximity of the mitre join (7) and opens into the distribution passage (16).

3. A corner connector and associated hollow profile members according to claim 1 characterised in that the spacer portions are in one piece with the corner connector or with the hollow profile members or are fitted on to the corner connector or on to the hollow profile members.

4. A corner connector and associated hollow profile members according to claim 3 characterised in that the spacer portions (20, 21, 22, 23; 36, 37, 38) are in the form of projections on surface portions of the flank surfaces or are in the form of ribs.

5. A corner connector and associated hollow profile members according to claim 4 characterised in that the spacer portions (20, 21) which are in one piece with the corner connector and which are in rib form extend parallel to the corner line, which aligns with the mitre join, of the corner connector.

6. A corner connector and associated hollow profile members according to claim 3 characterised in that the spacer portions (55) which are in one piece with the hollow profile members are in the form of ribs extending in the longitudinal direction of the hollow profile members.

7. A corner connector and associated hollow profile members according to claim 3 characterised in that the spacer portions are made from the same material as or a different material from the corner connector and are fixed to the corner connector by an adhesive agent.

8. A corner connector and associated hollow profile members according to claim 1 characterised in that the groove (13) provided in the corner line between the flank surfaces for distribution of the adhesive also passes through the inner corner of the corner connector.

9. A corner connector and associated hollow profile members according to one of the preceding claims characterised in that the limbs (8, 9) of the corner connector (3) are of a U-shaped configuration and are open at the free ends and at the inward sides.

10. A corner connector and associated hollow profile members according to one of the preceding claims characterised in that the fixing means which are formed out of the hollow profile members form or clear openings for adhesive to escape outwardly after an adequate degree of filling is achieved.

11. A corner connector and associated hollow profile members according to claim 1 characterised in that the corner connector is divided therethrough in the longitudinal central plane (30) or in a plane parallel thereto and the connector portions (31, 32) are positively lockingly connected together by projections (33) on the one connector portion (31), which projections extend through the plane of division of the connector portions and engage into bores (34) in the other connector portion (32).

12. A corner connector and associated hollow profile members according to claim 11 characterised in that outside surfaces of the corner connector which extend to the division plane and which can be coated with adhesive are sealed off relative to the internal chambers (40) by a labyrinth seal (41, 42) formed by stepped surfaces.

13. A corner connector and associated hollow profile members according to claim 1 characterised in that the corner connector (43) has at least two hollow chambers (45, 46) which are open at the flank sides extending parallel to the longitudinal central plane and possibly at the free ends of the connector limbs, the openings are closed at the flank sides by cover bodies (47), and the cover bodies form grooves and channels for guiding the adhesive and have the spacer portions (48, 50).

14. A corner connector and associated hollow profile members according to claim 13 characterised in that the cover body (47) is provided at the underside with portions (52, 43) which are formed thereon and has at the free ends tongues (51) which engage into the hollow chambers (45, 46).

15. A corner connector and associated hollow profile members according to claim 13 characterised in that the corner connector (43) is cut from an extruded profile member (44).

## Revendications

1. Raccord d'angle et profilés creux (1, 2) correspondants, coupés en onglet, d'un cadre pour fenêtres, portes ou façades avec un raccord d'angle (3, 29, 43), s'engageant, par ses branches, dans des chambres intérieures des profilés creux, branches dont la hauteur correspond à la hauteur libre des chambres intérieures, au moyen duquel les profilés creux (1, 2) peuvent être serrés avec appui par force, dans le joint à onglet, par des moyens de fixation pouvant être formés, enfoncés ou vissés dans des logements du raccord d'angle et avec un canal de distribution (16), s'étendant transversalement au plan médian longitudinal (15, 30), pour une pâte adhésive injectable, qui s'étend sur la hauteur du raccord d'angle et qui est limité par les profilés creux enfilés sur ce raccord, **caractérisé en ce que** le canal de distribution (16) est limité par une partie aplatie (17), dans la zone de l'angle extérieur du raccord d'angle et par les profilés creux (1, 2) enfilés sur ce raccord et en ce que le raccord d'angle (3, 29, 43) présente, dans la région ou au voisinage de la ligne d'angle (12) ou du joint à onglet (7), des rainures (13, 49), partant des surfaces de flancs (14, 39) parallèles à son plan médian longitudinal (15, 30), lesquelles rainures communiquent avec le canal de distribution (16) et en ce qu'entre les surfaces de flancs (14, 39), parallèles au plan médian longitudinal (15, 13), et les surfaces de délimitation intérieures des profilés creux, sont prévus des interstices, déterminés par des entretoises (20, 21, 22, 23 ; 36, 37, 38 ; 48, 50 ; 55), destinés à recevoir de la pâte adhésive, envoyée par le canal de distribution (16).

2. Raccord d'angle et profilés creux correspondants selon la revendication 1, caractérisé en ce que l'ouverture d'injection (18) de la pâte adhésive est prévue à proximité du joint à onglet (7) et débouche dans le canal de distribution (16).

3. Raccord d'angle et profilés creux correspondants selon la revendication 1, caractérisé en ce que les entretoises sont d'un seul tenant avec le raccord d'angle ou avec les profilés creux ou sont placées sur le raccord d'angle ou sur les profilés creux.

4. Raccord d'angle et profilés creux correspondants selon la revendication 3, caractérisé en ce que les entretoises (20, 21, 22, 23 ; 36, 37, 38) sont conformées en saillies de surfaces partielles des surfaces de flancs ou en tant que nervures.

5. Raccord d'angle et profilés creux correspondants selon la revendication 4, caractérisé en ce que les entretoises (20, 21) en forme de nervures, d'un seul tenant avec le raccord d'angle, s'étendent parallèlement à la ligne d'angle du raccord d'angle, alignée avec le joint à onglet.

6. Raccord d'angle et profilés creux correspondants selon la revendication 3, caractérisé en ce que les entretoises (55), d'un seul tenant avec les profilés creux, sont conformées en nervures s'étendant dans la direction longitudinale des profilés creux.

7. Raccord d'angle et profilés creux correspondants selon la revendication 3, caractérisé en ce que les entretoises sont réalisées dans le même matériau ou dans un autre matériau que le raccord d'angle et sont fixées sur le raccord d'angle, par un produit adhésif.

8. Raccord d'angle et profilés creux correspondants selon la revendication 1, caractérisé en ce que la rainure (13), prévue dans la ligne d'angle entre les surfaces de flanc, traverse aussi l'angle intérieur du raccord d'angle, pour la distribution de la pâte adhésive.

9. Raccord d'angle et profilés creux correspondants selon l'une des revendications précédentes, caractérisé en ce que les branches (8, 9) du raccord d'angle (3) sont en forme de U et sont ouvertes sur les côtés frontaux libres et sur les côtés intérieurs.

10. Raccord d'angle et profilés creux correspondants selon l'une des revendications précédentes, caractérisé en ce que les moyens de fixation, formés à partir des profilés creux, forment ou dégagent des ouvertures pour la sortie de pâte adhésive vers l'extérieur, après obtention d'un degré de remplissage suffisant.

11. Raccord d'angle et profilés creux correspondants selon la revendication 1, caractérisé en ce que le raccord d'angle est partagé de bout en bout dans le plan médian longitudinal (30) ou dans un plan parallèle à celui-ci et les parties de raccord (31, 32) sont assemblées entre elles par concordance de forme, par des tenons (33), s'étendant dans le plan de joint d'une partie de raccord (31), qui s'engagent dans des perçages (34) de l'autre partie de raccord (32).

12. Raccord d'angle et profilés creux correspondants selon la revendication 11, caractérisé en ce que des surfaces extérieures du raccord d'angle, s'étendant vers le plan de joint, pouvant être garnies de pâte adhésive, sont rendues étanches par rapport aux chambres intérieures (40), par une étanchéité à labyrinthe (41, 42), formée par des surfaces étagées.

13. Raccord d'angle et profilés creux correspondants selon la revendication 1, caractérisé en ce que le raccord d'angle (43) comporte au moins deux chambres creuses (45, 46), qui sont ouvertes sur les côtés des flancs parallèles au plan médian longitudinal et éventuellement aux extrémités frontales libres des branches du raccord, les ouvertures sur les côtés des flancs sont fermées par des corps de couverture (47) et les corps de couverture forment des rainures et des rigoles pour le guidage de la pâte adhésive et présentent les entretoises (48, 50).

14. Raccord d'angle et profilés creux correspondants selon la revendication 13, caractérisé en ce que le corps de couverture (47) est pourvu, sur sa face intérieure, de formations (52, 43), et présente, aux extrémités libres, des languettes (51) qui s'engagent dans les chambres creuses (45, 46).

15. Raccord d'angle et profilés creux correspondants selon la revendication 13, caractérisé en ce que le raccord d'angle (43) est découpé dans un profilé extrudé (44).
